# EUROPEAN PATENT APPLICATION

(11) **EP 3 789 543 A2**
(43) Date of publication of application: **10.03.2021**
(21) Application number: 20192009.7
(22) Date of filing: 20.08.2020
(51) Int. Cl.: E02F 9/08

(54) **ENERGY STORAGE ASSEMBLY**

(30) Priority: 03.09.2019 WO PCT/CN2019/104137
(71) Applicant: Guangxi LiuGong Machinery Co., Ltd., Liuzhou Guangxi 545007 (CN)
(72) Inventor: Wu, Weilin, Liuzhou, Guangxi 545007 (CN); Cai, Wen, Liuzhou, Guangxi 545007 (CN); Lu, Wei, Liuzhou, Guangxi 545007 (CN)
(74) Representative: WBH Wachenhausen Patentanwälte PartG mbB

(57) **Abstract**

The present invention relates to an energy storage assembly (1) for a construction machine, preferably for a tracked construction machine, comprising at least a first and a second energy storage device (2.1, 2.2), preferably a first and a second battery device, the energy storage devices (2,1; 2,2) each being configured to power a working equipment and/or locomotion of the construction machine, a rack (3) mountable to the construction machine, the rack (3) being configured to support the first and second energy storage devices (2.1, 2.2), preferably vertically above each other, and a first damping device (22.1) for damping vertical shocks acting on the first energy storage device (2.1) and a separate second damping device (22.2) for damping vertical shocks acting on the second energy storage device (2.2).

## Description

### TECHNICAL FIELD

The present invention relates to an energy storage assembly for a construction machine, and to a construction machine comprising such an energy storage assembly. The construction machine may be a tracked construction machine, e.g. an excavator.

### PRIOR ART

Electric construction machines may comprise a battery pack as a source of energy for driving a work equipment and/or locomotion of the machine. EP 2 949 818 B1 relates to an excavator with a battery module for powering an electric motor, which is connected to a hydraulic pump of a hydraulic circuit for actuating hydraulic cylinders of the excavator's boom. Furthermore, US 9,340,115 B2 relates to an excavator having a power storage device mounted to the excavator's superstructure via a damper.

### SUMMARY OF THE INVENTION

The present invention relates to an energy storage assembly for a construction machine. The construction machine may be a tracked construction machine and therefore comprise tracks instead of wheels for locomotion, i.e. for driving the machine forwards, backwards and/or sidewards. The construction machine may comprise one or multiple tracks, e.g. two tracks, wherein a relative motion of these two tracks with respect to each other may be utilized for steering of the machine. The construction machine may be a tracked excavator or any other kind of machine. The excavator may comprise a superstructure, which is pivotably provided on an undercarriage, the undercarriage supporting means for locomotion, e.g. tracks, and the superstructure supporting the excavator's boom and optionally an operator's cab.

The energy storage assembly of the present invention is suitable and configured to be used for a construction machine, e.g. for being provided on the superstructure of an excavator. The energy storage assembly comprises a first and a second energy storage device. The energy storage devices may respectively comprise a battery device, a capacitor and/or any other means for storing energy. The first and second energy storage devices are distinct and separate from each other, therefore constituting individual devices, which can be moved and assembled to the energy storage assembly and dissembled therefrom independently from each other. Each of the energy storage devices may comprise one or multiple energy storage modules, e.g. one or multiple battery modules. Each of the battery modules may comprise one or multiple battery cells. In one embodiment, each battery module comprises more than 20, preferably more than 30, e.g. 33 battery cells. In one embodiment, each energy storage device comprises a single battery module. In a further embodiment, each energy storage device comprises two of such battery modules, wherein it may also comprise more than two battery modules.

Each of the energy storage devices is configured to power a working device and/or locomotion of the construction machine. This means that the energy storage device exhibits a rated power and provides an amount of energy/current, which are suitable for driving components of the construction machine to use the machine in its intended fashion. According to an embodiment, the first and second energy storage devices are suitable for powering the work hydraulics of an excavator by driving the hydraulic pump via an electric motor, for powering an electric swing motor for pivoting the superstructure with respect to the undercarriage of the excavator and/or for driving tracks of the excavator. According to an embodiment, each of the electric energy devices comprises a battery module having a rated power of about or more than 100 Volt, is capable of providing a current of more than 100 Ampere, preferably more than 250 Ampere, e.g. approximately around 300 Ampere, and is capable of providing more than 20 kWh, preferably more than 25 kWh of energy with a single charge.

In addition, the energy storage assembly comprises a rack mountable to the construction machine, which is configured to support the first and second energy storage devices. Preferably, the rack is configured to support the first and second energy storage devices in the form of a vertical stack. The vertical direction corresponds to the vertical direction of the construction machine, when the energy storage assembly is mounted thereto in the intended fashion. According to an embodiment, the rack is configured to support more than three, e.g. six energy storage devices vertically above each other.

Furthermore, the energy storage assembly comprises a first damping device for damping vertical shocks acting on the first energy storage device and a separate second damping device for damping vertical shocks acting on the second energy storage device. The first damping device and the second damping device are individual units, which are separate and distinct from each other. Each of the damping devices may comprise one or multiple damping units for damping shocks. A vertical shock may be a stress or force which is exerted on the energy storage device in the vertical direction. E.g. the vertical shock may be generated upon driving with the construction machine over rough terrain. According to an embodiment, the construction machine does not comprise a suspension for absorbing shocks exerted on the tracks of the machine such that the first and second damping devices of the present invention are suitable for preventing those shocks to propagate up to the energy storage devices of the energy storage assembly.

Therefore, the energy storage assembly of the present invention exhibits high operational safety, as it allows for an effective prevention of shocks propagating to the energy storage devices. In particular, the matter of fact that each of the energy storage devices comprises its own damping device ensures that each of the energy storage devices is protected in an optimized manner.

According to an embodiment, the first and second damping devices are mechanical damping devices. Alternatively, it is possible that at least one of the damping devices is constructed as a hydraulic damping device, e.g. as a hydraulic damper. The mechanical damping devices may each comprise at least one elastically deformable rubber pad, which may be provided between the energy storage device and the rack. According to an embodiment, each of the damping devices comprises multiple rubber pads, which are provided at different positions, e.g. at all positions at which the energy storage device and the rack come into vertical contact with each other. However, it is also conceivable that the mechanical damping device exhibits an arbitrary other configuration as long it is suitable to absorb vertical shocks exerted on the energy storage device.

According to an embodiment, the rack comprises at least two spaced apart columns and at least one rod. The columns may be vertical columns or substantially vertical columns. The columns may be made from a profile element having an arbitrary cross section, e.g. an L-shaped cross section. Alternatively, the columns can be formed with a rectangular, e.g. quadratic, cross section, and/or in a solid or hollow fashion. The rod may have an arbitrary cross section but is an element which is longer than wide and thick. According to an embodiment, the rod has a rectangular cross section, although also circular or arbitrary other cross sections are conceivable. The rod mechanically connects the at least two columns, wherein the connection is such that it fixes the distance and the orientation of both columns with respect to each other. In other words, when the rod is installed in its intended fashion, the two columns cannot be moved apart and rotated with respect to each other. According to an embodiment this is achieved by a surface contact formed between the rod and both of the columns, which absorbs forces and moments generated upon trying to change the positional relationship of the two columns with respect to each other. This embodiment leads to a rack with high stiffness and therefore high operational safety. The stiffness and operational safety can be increased by providing one of these rods between the two columns at the bottom and the other one at the top.

According to an embodiment, the first and second energy storage devices each exhibit a connecting port, e.g. for connecting a power cable to allow energy to be extracted from the storage device. Alternatively or additionally, the connecting port may be a port for connecting a controller to control the energy extraction from the energy storage device. Every other connecting port is also conceivable in this regard. According to this embodiment, the rack of the energy storage assembly comprises a rod, which mechanically connects the two columns. The rod may be a horizontal rod. In vertical direction of the energy storage assembly, the rod is positioned between the connecting port of the first energy storage device and the connecting port of the second energy storage device so as not to obstruct accessibility of the connecting ports of both devices. This embodiment exhibits a high user friendliness, at the same time providing high stability and therefore high operational safety. Furthermore, it is conceivable that the columns exhibit cut-outs at the positions where the connecting ports are located for enhancing accessibility.

According to an embodiment, the rack comprises first and second diagonal rods, which are respectively mechanically connecting two columns. The diagonal rods are preferably situated in a triangular fashion with respect to each other to provide a rack with high stability. Each of the diagonal rods may exhibit an arbitrary cross section, e.g. a rectangular cross section, and may be coupled to the columns with a surface contact as described above and/or in an arbitrary other fashion. The energy storage assembly may comprise multiple sets of diagonal rods which are respectively oriented in a triangular arrangement with respect to each other.

According to an embodiment, each of the columns of the energy storage assembly comprises a first support unit for supporting the first energy storage device and a separate second support unit, which is distinct from the first support unit, for supporting the second energy storage device. Accordingly, the first and second support unit of a column are provided separately from each other and also separately from the support units of another column. Preferably, the support units are configured as individual supporting plate which may be releasably connected to the respective column. For example, the supporting plate is connected via a positioning device, e.g. via at least two positioning pins, to provide high positional accuracy, thereby increasing operational safety and user friendliness of the energy storage assembly. By providing the support units separately from each other, weight of the rack is decreased, at the same time providing good accessibility.

Alternatively, the energy storage assembly comprises a first support unit for supporting the first energy storage device and a separate second support unit for supporting the second energy storage device, each of these support units extending between the two columns. Preferably, each of the support units is configured as support beam having a supporting surface onto which the energy storage devices may be placed. This embodiment may allow for an energy storage assembly with high stiffness and large operational variability. E.g. with this embodiment it is easily possible to provide multiple energy storage devices horizontally besides each other.

In each of the above embodiments, the first damping device for damping vertical shock acting on the first energy storage device may be provided between the first support unit and the first energy storage device. Likewise, the second damping device for damping vertical shocks acting on the second energy storage device may be provided between the second support unit and the second energy storage device. This embodiment results in an energy storage assembly with low complexity, high stability and high operational safety.

According to an embodiment, the rack comprises four vertical columns, which may be formed identical to or different from each other. Each of the columns may be formed as described above. Furthermore, each column is mechanically connected with two further columns via two horizontal rods situated at the top and at the bottom of the columns for fixing the distance and orientation of the columns with respect to each other, as described above. This arrangement of the rack forms a front surface at which the connecting ports of the first and second energy storage units are provided, two opposing side surfaces and a back surface, which is situated opposed to the front surface. The rack further comprises a first set of diagonal rods mechanically connecting the two columns of the first and a second set of diagonal rods mechanically connecting the two columns of the second side surface, wherein the diagonal rods may be designed and oriented with respect to each other as described above. In addition, the rack according to this embodiment comprises a horizontal rod mechanically connecting the two columns of the front surface and being provided between the ports of the first and second energy storage devices in vertical direction so as not to obstruct accessibility thereof. The different features of the energy storage assembly according to this embodiment exhibit the synergetic effect that they provide an energy storage assembly with a rack exhibiting high structural integrity, thereby allowing the assembly of this embodiment to be effectively used on a tracked construction machine operating in rough terrain and being exposed to large forces and moments during intended operation. Only the individual features of the energy storage assembly combined make the assembly particularly suitable for this task. According to an embodiment, also the back surface of the rack comprises at least one set of diagonal rods mechanically connecting the two columns of the back surface. Furthermore, if the first and/or second support unit is formed as a support beam, as described above, one of the horizontal rods of the front surface, e.g. the horizontal rod which is positioned at the bottom, is formed as a support beam with a supporting surface, as described above. In such a case, the energy storage assembly may further comprise a support unit formed as a support beam with a supporting surface at the back surface of the rack, which may be formed identically, e.g. at the same vertical height, and with the same cross section, as the support beam at the front surface.

According to an embodiment, one of the first and second energy storage devices comprises multiple energy storage units, e.g. multiple battery modules. The energy storage device may comprise a single carrier via which it is mounted to the rack of the assembly. The carrier may be a single element or may be constructed from multiple elements, which are rigidly attached to each other. The carrier may be configured to carry two energy storage units, e.g. two battery modules, behind each other. Furthermore, the rack may be configured to store multiple energy storage devices, which may respectively comprise multiple energy units, above and/or besides each other. In the latter case, the energy storage assembly can be configured to support the energy storage devices in a matrix like manner with multiple rows and columns. With this embodiment, an energy storage assembly allowing for larger operating time without charging can be provided. The invention further relates to a construction machine comprising an energy storage assembly according to one of the above-described embodiments. The construction machine may be a tracked construction machine, e.g. an excavator.

### BRIEF DESCRIPTION OF THE DRAWINGS

- Fig. 1: shows a frame of the superstructure of an excavator comprising three energy storage assemblies according to an embodiment of the present invention.
- Fig. 2: shows one of the energy storage assemblies of Fig. 1 in a perspective view.
- Fig. 3: shows an energy storage device of the energy storage assembly of Fig. 2.
- Fig. 4: shows a rack of the energy storage assembly of Fig. 2.
- Fig. 5: shows a sectional view for illustrating the connection of a supporting unit and a horizontal rod to a column of the rack of Fig. 4.
- Fig. 6: shows an energy storage assembly according to a further embodiment of the present invention.
- Fig. 7: shows an energy storage device of the energy storage assembly of Fig. 6.
- Fig. 8: shows a rack of the energy storage assembly of Fig. 6.
- Fig. 9: shows a detailed view of the rack of Fig. 8 for explaining the connection of a support beam to a column of the rack of Fig. 8.
- Fig. 10: shows an energy storage assembly according to a further embodiment of the present invention.

### BRIEF DESCRIPTION OF EMBODIMENTS

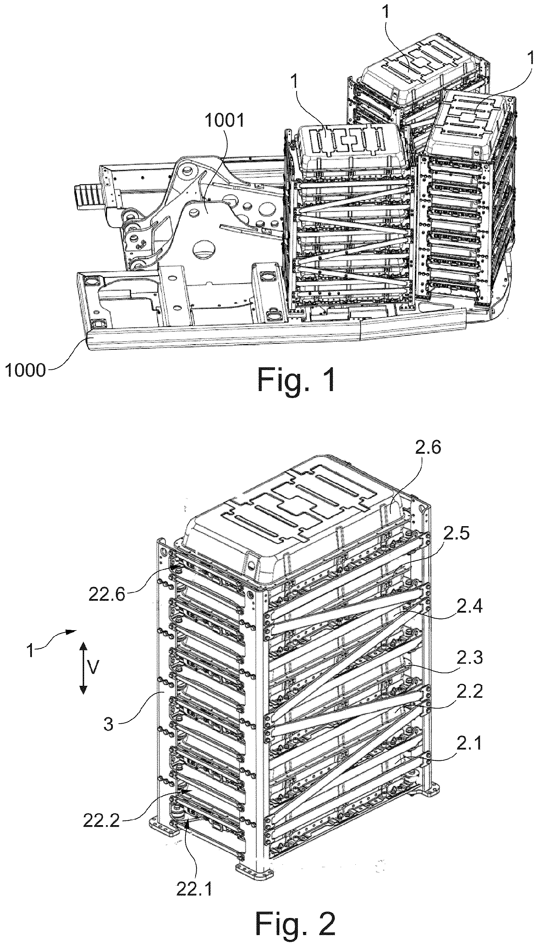

Fig. 1 shows a frame 1000 of a superstructure of an excavator (not shown) comprising three energy storage assemblies 1 according to an embodiment of the present invention. The energy storage assemblies 1 are releasably mounted to the frame 1000 via screws and/or bolts. The energy storage assemblies 1 are provided at a back portion of the frame 1000 backwards of a supporting region 1001 for supporting a boom (not shown) of the excavator. The energy storage assemblies 1 are twisted with respect to each other so as to optimally use the room provided backwards of the boom supporting region 1001. One, some or all of the energy storage assemblies 1 may function as a counterweight of the excavator.

The excavator comprises a superstructure with the frame 1000, to which a boom is mounted at the boom supporting section 1001. Furthermore, the excavator comprises an undercarriage with tracks for locomotion of the excavator, wherein the frame 1000 of the superstructure is pivotably supported on the undercarriage. The excavator according to this embodiment is a pure electric excavator with all of the power for locomotion and/or driving of the excavator's working equipment, e.g. the boom and the swing drive for rotating the superstructure with respect to the undercarriage, being provided by the energy storage assemblies 1. The excavator may comprise an electric motor for rotating the superstructure with respect to the undercarriage, which is powered by the energy storage assemblies 1. Furthermore, the excavator may comprise a hydraulic pump, which is powered by the motor of the swing drive and/or by a separate electric motor, the separate electric motor also being powered by energy of the electric storage assemblies 1. The hydraulic pump may power a hydraulic circuit with hydraulic actuators for positioning the boom of the excavator. The tracks of the excavator may be powered via the hydraulic circuit or via one or multiple electric motors, which are powered by energy of the energy storage assemblies 1. According to an embodiment, the excavator does not comprise a suspension for damping vertical shocks exerted on the tracks of the undercarriage.

Fig. 2 shows one of the energy storage assemblies 1 of the frame 1000 of Fig. 1. The energy storage assembly 1 comprises a first, a second, a third, a fourth, a fifth, and a sixth energy storage device 2.1, 2.2, 2.3, 2.4, 2.5, 2.6. Each of the energy storage devices 2.1, 2.2, 2.3, 2.4, 2.5, 2.6 is configured to power the working equipment of the excavator, e.g. the boom via the hydraulic circuit with the hydraulic pump and the swing drive, as well as locomotion of the excavator via the tracks of the undercarriage. Furthermore, the energy storage assembly 1 comprises a rack 3 for supporting the six energy storage devices 2.1, 2.2, 2.3, 2.4, 2.5, 2.6. In the present embodiment, the rack 3 is configured to support the energy storage devices 2.1, 2.2, 2.3, 2.4, 2.5, 2.6 vertically above each other in vertical direction V.

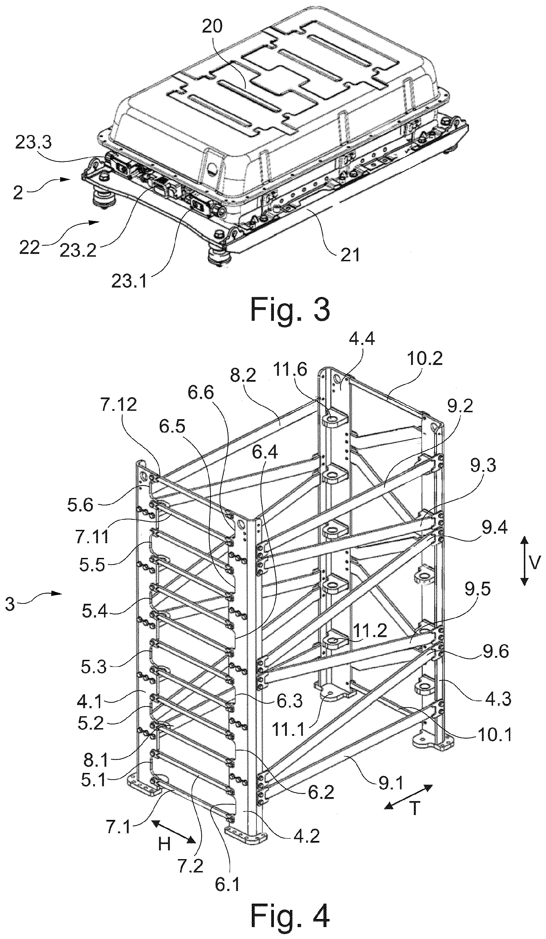

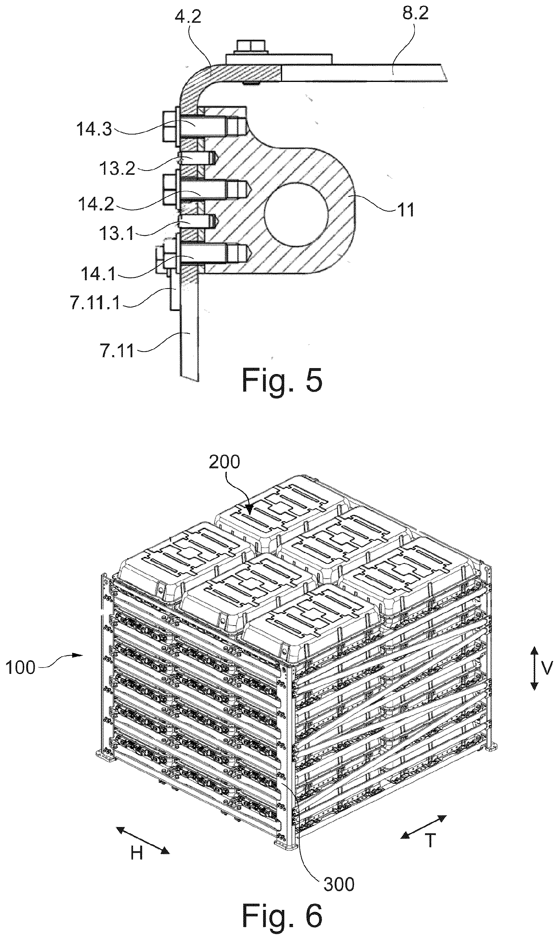

As derivable from Fig. 4, the rack 3 comprises four vertical columns 4.1, 4.2, 4.3, 4.4, which are respectively formed as a profile element with a substantially L-shaped cross-section, as shown in Fig. 5. The vertical columns 4.1, 4.2, 4.3, 4.4 are positioned with respect to each other in a rectangular fashion so as to form two opposing large side surfaces as well as a smaller front and back surface. At the front surface between columns 4.1 and 4.2, multiple horizontal rods are provided, which mechanically connect the first and the second columns 4.1, 4.2 with each other. In the present embodiment, the long legs of the L-shaped profile elements forming the columns 4.1, 4.2 form the front surface and respectively exhibit cut-outs so as to increase the free space therebetween. In the present embodiment, each of the long legs of the columns 4.1, 4.2 comprises six cut-outs 5.1, 5.2, 5.3, 5.4, 5.5, 5.6 and 6.1, 6.2, 6.3, 6.4, 6.5, 6.6, respectively, the cut-outs of the two columns 4.1, 4.2 respectively being provided at the same height in vertical direction V. Furthermore, the cut-outs 5.1, 5.2, 5.3, 5.4, 5.5, 5.6 and 6.1, 6.2, 6.3, 6.4, 6.5, 6.6 are equidistantly spaced along the length of the columns 4.1 and 4.2. Furthermore, below and above each of the cut-outs 5.1, 5.2, 5.3, 5.4, 5.5, 5.6 and 6.1, 6.2, 6.3, 6.4, 6.5, 6.6, a horizontal rod 7.1, 7.2, ... 7.11, 7.12 is provided. As derivable from Fig. 5, the horizontal rods 7.1, 7.2, ... 7.11, 7.12 exhibit a rectangular cross section and are situated upright so as to form a surface contact with both of the columns 4.1, 4.2. Specifically, the horizontal rods 7.1, 7.2, ... 7.11, 7.12 exhibit a length extension in the horizontal direction H, a height extension in the vertical direction V, and a thickness extension, which is oriented perpendicular to the horizontal and vertical directions. The surfaces of the rectangular rods 7.1, 7.2, ... 7.11, 7.12 which engage with the columns 4.1, 4.2 are spanned by the height and thickness directions of the rods, respectively. More precisely, said surfaces of the rods engage with surfaces of the columns 4.1, 4.2, which are also spanned by the height and thickness directions of the columns 4.1, 4.2. The rods 7.1, 7.2, 7... 7.11, 7.12 are positioned between the columns 4.1 and 4.2. Each of the rectangular horizontal rods 7.1, 7.2, ... 7.11, 7.12 has a mounting plate, one of which 7.11.1 being shown in Fig. 5, welded to each end of the respective horizontal rod for mounting the rod to the adjacent column via a screw and/or a bolt. Due to the surface contacts between the horizontal rods 7.1, 7.2, ... 7.11, 7.12 and the columns 4.1 and 4.2, the rods fix the distance and orientation of both columns 4.1 and 4.2 with respect to each other.

Furthermore, the rack 3 comprises horizontal bottom rods 8.1 and 9.1, which are approximately positioned at the height of the horizontal rod 7.2 of the front surface, which is positioned directly above the first cut-outs 5.1 and 6.1. The horizontal bottom rods 8.1 and 9.1 of the opposing side surfaces connect the first column 4.1 with the fourth column 4.4 (rod 8.1) and the second column 4.2 with the third column 4.3 (rod 9.1). Likewise, the rack 3 comprises horizontal top rods 8.2 and 9.2, which are provided at the opposing side surfaces and situated at approximately the vertical height of the horizontal rod 7.11 of the front surface, which is positioned directly below the sixth cut-outs 5.6 and 6.6 of the columns 4.1 and 4.2. Each side surface further comprises two pairs of diagonal rods 9.3, 9.4 and 9.5, 9.6 (rods of righthand side surface), which respectively extend between the two columns 4.1 and 4.4 as well as 4.2 and 4.3 forming the side surfaces, the diagonal rods being arranged in a triangular fashion with respect to each other. As derivable from Fig. 4, the tip of the triangle is respectively provided at the back surface side of the rack 3. All of the rods of the side surfaces may exhibit a rectangular cross section with dimensions larger than those of the horizontal rods of the front surface. Furthermore, all of the rods of the side surfaces may be coupled to the columns 4.1, 4.2, 4.3, 4.4 with surface contacts and bolts/screws as described in connection with the horizontal rods of the front surface and as shown in Fig. 5.

At the back surface, the rack 3 comprises a bottom horizontal rod 10.1 and a top horizontal rod 10.2, which are respectively formed and connected to the adjacent columns 4.3 and 4.4 of the back surface as the bottom horizontal rod 7.1 and the top horizontal rod 7.2 of the front surface. Furthermore, the back surface comprises five diagonal rods, which are mechanically connected to the third and fourth columns 4.3 and 4.4 and are positioned uniformly between the bottom and top horizontal rods 10.1 and 10.2 to form a uniform zigzag pattern between the columns 4.3, 4.4 of the back surface. The connection between the diagonal rods of the back surface to the adjacent columns 4.3 and 4.4 can be configured with surface contacts and bolts/screws as described in connection with the horizontal rods of the front surface.

Furthermore, each of the columns 4.1, 4.2, 4.3, 4.4 comprises six individual supporting units 11.1, 11.2, 11.3, 11.4, 11.5, 11.6 (only supporting units of column 4.4 shown with reference signs) for supporting the energy storage devices, wherein these supporting units are formed separately from each other and separate from the supporting units of the other columns. The first to sixth supporting units of the four columns are respectively formed at the same vertical height, wherein the first supporting units are formed below the first cut-outs 5.1, 6.1, the second supporting units above the first cut-outs 5.1, 6.1 and below the second cut-outs 5.2, 6.2 and so on, wherein the sixth supporting units are formed above the fifth cut-outs 5.5, 6.5 and below the sixth cut-outs 5.6, 6.6 of the front surface. As derivable from Fig. 5, in the present embodiment, all of the supporting units are respectively formed as supporting plates 11, which are respectively mounted to the column (column 4.2 shown in Fig. 5) with at least two positioning pins 13.1, 13.2 for fixing the orientation of the supporting plate 11 with respect to the column 4.2. In addition, the supporting plates 11 are mounted to the column with three bolts/screws 14.1, 14.2 and 14.3. All of the columns 4.2 can have two through-holes for bolts 14.1 and 14.3, wherein they may have a threaded hole for bolt 14.2, which is positioned between the other two through-holes for bolts 14.1 and 14.3. The threaded hole may have a large diameter such that bolt 14.2 does not engage with its thread. To disassemble the supporting plates 11, bolts 14.1, 14.2 and 14.3 can be detached and the supporting plate 11, and the supporting plate 11 can be pushed away from respective column 4.3 by inserting a further threaded bolt into the threaded hole for bolt 14.2 to push the respective supporting plate 11 away from the respective column 4.3. Furthermore, as derivable from Fig. 4, the first set of supporting plates is formed by the mounting brackets of each column, with which the respective column is mounted to the frame 1000 of the construction machine. The supporting plates are respectively provided on the inside of the long leg of each column.

One of the energy storage devices 2 of the energy storage assembly 1 is shown in Fig. 3. In the present embodiment, the energy storage device 2 comprises a single battery module 20 comprising multiple individual battery cells, e.g. more than 10, preferably 33 cells. The battery module 20 is capable of delivering a couple of 100 Amperes and exhibits a rated voltage of approximately 100 Volts. The battery module is capable of storing an amount of energy, which is more than 25 kWh. Besides the battery module 20, the energy storage device 2 comprises a carrier 21, which may be made from a single part. In the present embodiment, the battery module 20 is provided on the top formed carrier 21. The carrier 21 exhibits a rectangular shape and comprises a damping device 22, which comprises four mechanical rubber damping units, which are formed as elastically deformable rubber pads, and which are provided at the corners of the carrier 21. Each of the energy storage devices 2.1, 2.2, 2.3, 2.4, 2.5, 2.6 of the energy storage assembly 1 of Fig. 2 comprises its own damping device 22.1, 22.2, 22.3, 22.4, 22.5, 22.6. The carrier 21 of the energy storage device 2 comprises two side surfaces, a front surface and a back surface, wherein multiple connectors 23.1, 23.2, 23.3 of the battery module 20 are provided at the front surface thereof.

The energy storage device 2 is configured to be supported by the rack 3, namely by the supporting plates 11 of the rack 3. For that purpose, the rubber damping pads 22 provided at the four corners of the carrier 21 are positioned on the four supporting plates 11, which are provided at the columns of the rack 3. The front surface, namely the cut-outs 5.1, 6.1, 5.2, 6,2, ... 5.6, 6.6 and the horizontal rods 7.1, 7.2, ... 7.11, 7.12 are matched to the configuration of the energy storage devices 2 in such a way, that the ports 23.1, 23.2, 23.3 of each energy storage device 2 are positioned at the height of two opposing cut-outs and between two horizontal rods for providing an optimal accessibility.

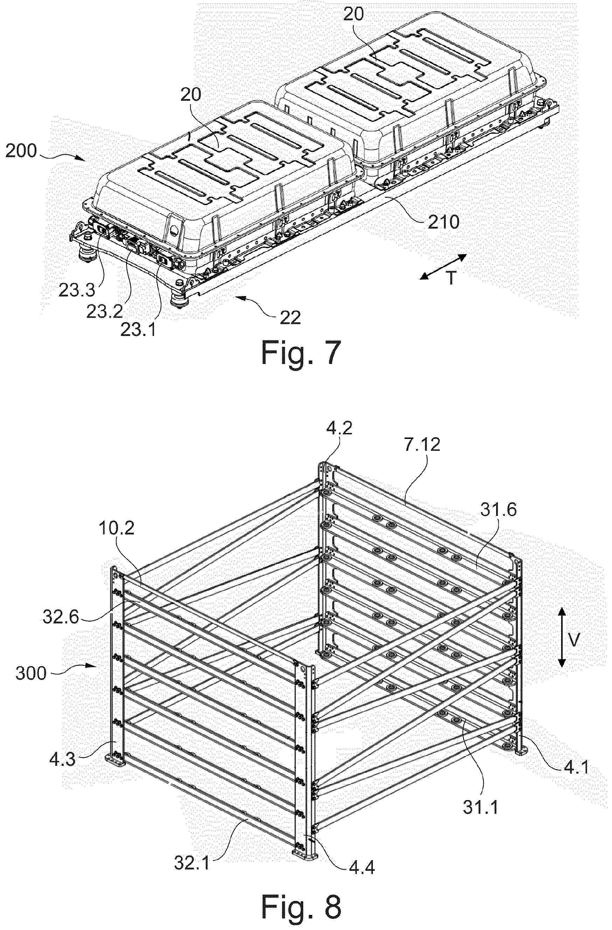

Fig. 6 shows an energy storage assembly 100 according to a further embodiment of the present invention. The energy storage assembly 100 is configured as the storage assembly 1 described in connection with Figs. 1 to 5 except of the below described differences. As derivable from Fig. 7, the energy storage device 200 of the embodiment of Fig. 6 comprises a carrier 210 carrying two battery modules 20, which may respectively be configured as the battery module 20 described in connection with Fig. 3. In the present embodiment, the two battery modules 20 are provided behind each other and are preferably electrically connected with each other in such a way that only the connector ports 23.1, 23.2, 23.3 at the front surface of the carrier 210 are required.

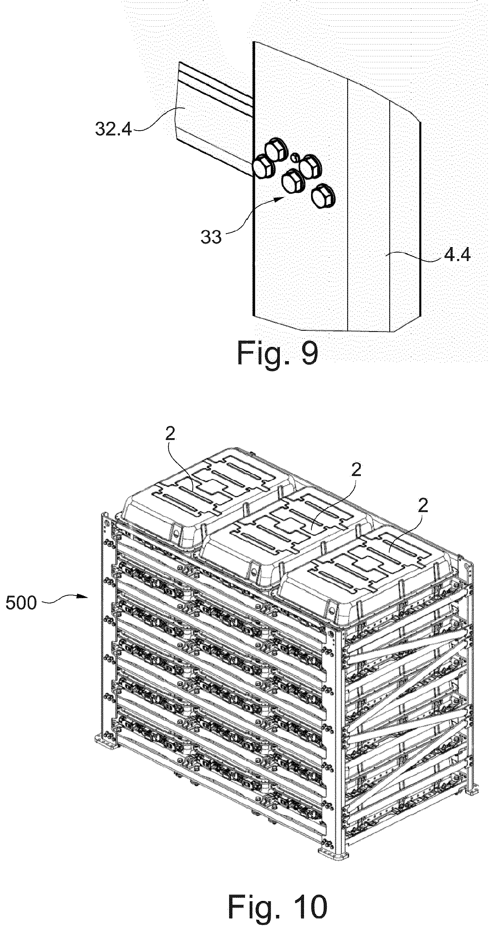

Furthermore, as derivable from Fig. 8, the rack 300 of this second embodiment only comprises the top horizontal rods 7.12 and 10.12 at the front and back surfaces, respectively. In addition, the front and back surfaces of the rack 300 respectively comprise six support beams, which horizontally extend between the two columns 4.1 and 4.2 of the front surface and the two columns 4.3 and 4.4 of the back surface, respectively. The six support beams 31.1, ... 31.6 and 32.1, ... 32.6 respectively overlap with the columns and are connected to these with multiple screws/bolts 33, e.g. five screws/bolts, as derivable from Fig. 9. The support beams 31.1, ... 31.6 and 32.1, ... 32.6 respectively comprise a supporting surface onto which the damping pads of the damping device 22 of the energy storage device 200 can be supported.

As derivable from Fig. 6, the energy storage assemblies 100 of the second embodiment is configured such that three energy storage devices 200 according to the design of Fig. 7 can be stored besides each other on one horizontal support beam in horizontal direction H. Furthermore, as the rack 300 comprises six horizontal support beams at the front and back surfaces, the rack 300 is further configured to store six rows of energy storage devices 200 according to Fig. 7 in height direction V. Accordingly, the assembly 100 of Fig. 6 is configured to store 18 energy storage devices 200 according to Fig. 7, and thus 36 battery modules 20.

Fig. 10 shows a third embodiment of an energy storage assembly 500. The energy storage assembly 500 of the third embodiment is configured as the energy storage assembly 100 of the second embodiment of Fig. 6 with the exception that the energy storage devices 2 are configured as the energy storage device 2 of the first embodiment. Accordingly, the energy storage assembly 500 of the third embodiment is configured to store 18 energy storage devices according to the configuration of Fig. 3, and thus 18 battery modules 20 in total.

## Claims

1. An energy storage assembly (1) for a construction machine, preferably for a tracked construction machine, comprising at least a first and a second energy storage device (2.1, 2.2), preferably a first and a second battery device, the energy storage devices (2,1; 2,2) each being configured to power a working equipment and/or locomotion of the construction machine, a rack (3) mountable to the construction machine, the rack (3) being configured to support the first and second energy storage devices (2.1, 2.2), preferably vertically above each other, and a first damping device (22.1) for damping vertical shocks acting on the first energy storage device (2.1) and a separate second damping device (22.2) for damping vertical shocks acting on the second energy storage device (2.2).

2. The energy storage assembly (1) according to claim 1, wherein the first and second damping devices (22.1, 22.2) are mechanical damping devices, at least one of the damping devices preferably comprising at least one elastically deformable rubber pad.

3. The energy storage assembly (1) according to one of the preceding claims, wherein the rack (3) comprises at least two spaced apart columns (4.1, 4.2) and at least one rod (7.11), the rod mechanically connecting the at least two columns (4.1, 4.2) and fixing the distance and orientation of the two columns (4.1, 4.2) with respect to each other.

4. The energy storage assembly (1) according to claim 3, wherein the rod (7.11) exhibits a surface contact with each of the columns (4.1, 4.2) to fix the distance and orientation of the two columns (4.1, 4.2) with respect to each other.

5. The energy storage assembly (1) according to claim 3 or 4, wherein the rack (3) comprises at least two of such rods (7.1, 7.12), one of the rods (7.12) being provided at the top and the other one (7.1) at the bottom of the columns (4.1, 4.2) to fix the distance and orientation of the two columns (4.1, 4.2) with respect to each other.

6. The energy storage assembly (1) according to one of claims 3 to 5, wherein the first and second energy storage devices (2.1, 2.2) each exhibit a connecting port (23.1) between the two, preferably vertical, columns (4.1, 4.2), a rod (7.2) connecting the two columns (4.1, 4.2) extending, preferably horizontally, between the connecting port (23.1) of the first energy storage device (2.1) and the connecting port (23.1) of the second energy storage device (2.2) so as not to obstruct accessibility of the connecting ports (23.1) of the first and second energy storage devices (2.1, 2.2).

7. The energy storage assembly (1) according to one of claims 3 to 6, the rack (3) comprising a first and a second diagonal rod (9.3, 9.4), the rods each mechanically connecting the at least two columns (4.2, 4.3), wherein the diagonal rods are provided in a triangle arrangement with respect to each other.

8. The energy storage assembly (1) according to one of claims 3 to 7, wherein each of the columns (4.1, 4.2) comprises a first support unit (11.1) for supporting the first energy storage device (2.1) and a separate second support unit (11.2) for supporting the second energy storage device (2.2), the first and second support units of the different columns (4.1, 4.2) being separate from each other and preferably being configured as individual supporting plates.

9. The energy storage assembly (1) according to one of claims 3 to 8, wherein a first support unit (31.1) for supporting the first energy storage device and a separate second support unit (32.2) for supporting the second energy storage device extend between the two columns (4.1, 4.2), the first and second support units preferably being configured as support beams with a supporting surface.

10. The energy storage assembly (1) according to claim 8 or 9, wherein the first damping device (22.1) is provided between the first support unit (11.1) and the first energy storage device (2.1) and the second damping device (22.2) is provided between the second support unit (11.2) and the second energy storage device (2.2).

11. The energy storage assembly (1) according to at least one of claims 3 to 10, the rack (3) comprising four vertical columns (4.1, 4.2, 4.3. 4.4), wherein each column is mechanically connected with two further columns via two horizontal rods situated at the top and at the bottom of the columns for fixing the distance and orientation of the columns (4.1, 4.2, 4.3. 4.4) with respect to each other, thereby forming a front surface at which the connecting ports (23.1) of the first and second energy storage devices (2.1, 2.2) are provided, two opposing side surfaces and a back surface, wherein the rack (3) further comprises a first set of diagonal rods mechanically connecting the two columns of the first and a second set of diagonal rods mechanically connecting the two columns of the second side surface, and a horizontal rod mechanically connecting the two columns of the front surface and being provided between the ports (23.1) of the first and second energy storage devices (2.1, 2.2) in height direction (V).

12. The energy storage assembly (1) according to claim 9 or 10 and according to claim 11, wherein the horizontal rod (31.1) of the front surface is a support unit for one of the energy storage devices, the rack (300) further comprising a support unit (32.1) for that energy storage device extending between the columns (4.3, 4.4) of the back surface.

13. The energy storage assembly (1) according to one of the preceding claims, wherein at least one of first and second energy storage devices (200) comprise multiple energy storage units (20), preferably battery modules, which are preferably provided behind each other and/or on a single carrier (210).

14. The energy storage assembly (1) according to one of the preceding claims, wherein the rack (300) is configured to support energy storage devices (200) above and besides each other.

15. A construction machine, preferably a tracked construction machine, comprising an energy storage assembly (1) according to one of claims 1 to 14.
